# EUROPÄISCHE PATENTANMELDUNG

(11) **EP 0 910 148 A1**
(43) Veröffentlichungstag der Anmeldung: **21.04.1999**
(21) Anmeldenummer: 97116823.2
(22) Anmeldetag: 26.09.1997
(51) Int. Cl.: H02G 15/10, H02G 15/26

(54) **Verfahren und Vorrichtung zum Verhindern eines Kurzschlusses in Kabelmuffen**

(71) Anmelder: PAUL JORDAN ELEKTROTECHNISCHE FABRIK, GmbH & Co., D-12249 Berlin (DE)
(72) Erfinder: Schulz, Barbara, 12051 Berlin (DE); Pfeiffer, Bernhard Dr,, 12309 Berlin (DE)
(74) Vertreter: Alber, Norbert, Dipl.-Ing.

(57) **Zusammenfassung**

Die Erfindung betrifft ein Verfahren sowie eine Vorrichtung zum Verhindern eines Kurzschlusses durch Trockenhalten der elektrischen Anschlußstellen in Kabelmuffen, um trotz aller Gegebenheiten in die Muffe, und speziell in den Innenraum der Muffe, in dem sich die elektrischen Anschlulßstellen befinden, eingetretenes Wasser nicht zu einem Kurzschluß führen zu lassen. Das auftretende Wasser wird in der Muffe (8, 9) an einer Sammelstelle (7) gesammelt und wenigstens zum Teil aus der Muffe (8, 9) entfernt.

## Beschreibung

### I. Anwendungsgebiet

Die Erfindung betrifft ein Verfahren sowie eine Vorrichtung zum Verhindern eines Kurzschlusses durch Trockenhalten der elektrischen Anschlußstellen in Kabelmuffen.

### II. Technischer Hintergrund

Derartige Kabelmuffen werden insbesondere zum Verlängern und Abzweigen von im Erdboden verlegten Starkstromkabeln im Niederspannungsbereich eingesetzt, wobei innerhalb der Muffe der Anschluß eines Abzweigkabels vom durchgehenden Hauptkabel realisiert wird oder die Verlängerung eines Hauptkabels.

Die zur Herstellung des elektrischen Kontaktes zwischen zwei Adern notwendigen offengelegten Stellen der Adern einschließlich der spannungsführenden Verbindungsstelle selbst müssen dabei gegeneinander isoliert werden, um einen Kurzschluß z. B. durch in die Muffe eindringendes Wasser zu verhindern. Dies muß nicht nur beim Einbau, sondern über Jahrzehnte gewährleistet wegen.

Dabei kann Wasser direkt aus dem Erdreich in die Muffe eindringen, was durch eine Abdichtung der Muffe, auch an den Kabeleingängen, verhindert wird.

Wasser kann jedoch auch durch das Kabel selbst, also innerhalb der Kabelisolierung, als sogenanntes Längswasser eindringen, indem an einer außerhalb der Muffe liegenden Stelle z. B. durch eine Beschädigung des Kabelmantels Wasser aus dem Erdreich ins Innere des Kabels eindringen kann und von dort, z. B. aufgrund eines Gefälles im verlegten Kabel, in die Muffe vordringen kann.

Das Vordringen von Längswasser wird z. B. durch speziell gestaltete Muffengehäuse zu verhindern versucht.

Weiterhin wird das Vordringen von Feuchtigkeit an die elektrischen Anschlußstellen durch das Ausfüllen des Muffeninnenraums mit einer Vergußmasse verhindert, welche die stromführenden Teile gegeneinander isoliert und damit vor Kurzschluß schützt. Derartige Vergußmassen erhöhen jedoch die Kosten einer Muffenverbindung deutlich und sind je nach Art und Menge der verwendeten Vergußmasse u. U. nicht umweltfreundlich.

Weiterhin kann Wasser innerhalb der Isolierung der einzelnen Adern in die Muffe vordringen.

### III. Darstellung der Erfindung

### a) Technische Aufgabe

Es ist daher die Aufgabe gemäß der vorliegenden Erfindung, ein Verfahren sowie eine Vorrichtung zu schaffen, um trotz aller Gegebenheiten in die Muffe, und speziell in den Innenraum der Muffe, in dem sich die elektrischen Anschlußstellen befinden, eingetretenes Wasser nicht zu einem Kurzschluß führen zu lassen.

### b) Lösung der Aufgabe

Diese Aufgabe wird durch die kennzeichnenden Merkmale der Ansprüche 1, 14 und 15 gelöst. Vorteilhafte Ausführungsformen ergeben sich aus den Unteransprüchen.

Die erste Maßnahme besteht darin, in das Innere der Muffe eingedrungenes Wasser zunächst an einer möglichst weit von den elektrischen Anschlußstellen entfernten Sammelstelle zu sammeln.

Ein Kurzchluß durch Kriechströme wird vermieden, indem zwischen den einzelnen Anschlußstellen ausreichend große Kriechstrecken eingehalten werden.

Zur Lösung der Aufgabe wird bei einer Muffe, die in der Regel aus einem Oberteil und einem Unterteil besteht, im Muffenunterteil eine Ausbuchtung oder Vertiefung an einer möglichst weit von den elektrischen Anschlußstellen entfernten Position angeordnet, und zusätzlich die Muffe im Untergrund so positioniert, daß diese durch die Ausbuchtung oder Vertiefung gebildete Sammelstelle den tiefsten Punkt der Muffe darstellt. Ggf. ist zu diesem Zweck die Innenfläche des Bodens der Muffe - relativ zur Kabeldurchgangsrichtung - schräg abfallend zur Sammelstelle hin auszubilden.

Das dadurch vergrößerte Volumen der Muffe ist wenig nachteilig, da dieses vergrößerte Volumen nicht wie bei den bisherigen Abdichtungstechniken mittels Vergußmasse aufgefüllt werden muß.

Nachdem an der Sammelstelle sich eine relevante Wassermenge angesammelt hat, muß diese registriert werden, was z. B. durch einen mechanischen Schwimmerschalter, vorzugsweise jedoch durch alterungsbeständige nichtmechanische Sensoren wie elektrische Feuchtigkeitssensoren etc. registriert wird.

Der zweite wesentliche Schritt besteht darin, das an der Sammelstelle vorhandene Wasser aus der Muffe zu entfernen, bevor das Wasser die elektrischen Anschlußstellen erreicht hat.

Eine Möglichkeit der Entfernung besteht darin, das Wasser aus der Muffe abzupumpen, wobei die Ableitung in die Umgebung über ein Rückschlagventil oder eine nur in eine Richtung durchlässige Membran bzw. eine gasdurchlässige, flüssigkeitsundurchlässige Membran führt, um auf diesem Weg ein Eindringen von Wasser in die Muffe zuverlässig zu verhindern. Ggf. sind zwei Rückschlagventile hintereinander vorzusehen.

Das Auspumpen erfolgt mittels einer vorzugsweise elektrisch arbeitenden Pumpe innerhalb der Muffe, die ihre elektrische Energie direkt aus den durch die Muffe geführten elektrischen Kabeln bezieht und insbesondere direkt am Klemmring der Muffe, welcher den Kontakt zwischen den miteinander elektrisch zu verbindenden Adern sicherstellt, angreift.

Eine andere Möglichkeit besteht darin, vorhandenes Wasser durch Überdruck aus der Muffe herauszupressen.

Ein solcher Überdruck kommt durch Erwärmung der innerhalb der Muffe vorhandenen Luft und die dadurch bewirkte Ausdehnung der Luft zustande, sofern ein Austritt unterhalb der Flüssigkeitsoberfläche der Sammelstelle mündet. Auch in diesem Fall ist die Austrittsleitung nach außen mit einem oder mehreren Rückschlagventilen abzusichern, und diese Rückschlagventile müssen einen Schwellenwert für das Öffnen besitzen, der niedriger liegt als die Druckbelastbarkeit der an und in der Muffe vorhandenen Dichtungen.

Eine andere Möglichkeit der Druckerzeugung besteht darin, in der Muffe zusätzliches Gas zu produzieren und dadurch den Druck innerhalb der Muffe zu erhöhen. Die Gasproduktion wird wiederum vorzugsweise elektrisch mit Hilfe der durch die stromführenden Leiter vorhandenen elektrischen Energie erzeugt.

Eine Möglichkeit der Gaserzeugung besteht in der Elektrolyse des an der Sammelstelle vorhandenen Wassers in Wasserstoffgas und Sauerstoffgas, wodurch eine extreme Volumenvergrößerung des umgewandelten Wassers einhergeht.

Eine weitere Möglichkeit besteht darin, das vorhandene Wasser mittels einer elektrischen Heizvorrichtung zu erwärmen und dadurch in Waserdampf umzuwandeln, was ebenfalls unter starker Volumenerhöhung und damit Druckerzeugung innerhalb der Muffe vor sich geht.

Eine andere Möglichkeit der Gaserzeugung besteht darin, im Muffeninnenraum einen Stoff anzuordnen, welcher zusammen mit starker Feuchtigkeit bzw. Wasser größere Mengen eines Gases entwickelt und dadurch das restliche Wasser der Sammelstelle nach außen drückt. Ein solcher Stoff könnte beispielsweise im Bereich der Sammelstelle vertikal zu dessen Flüssigkeitsniveau so angeordnet werden, daß z. B. erst bei Erreichen einer gewissen Mindestmenge an der Sammelstelle der Flüssigkeitsspiegel diesen Stoff erreicht und zu einer Gasbildung führt. Umgekehrt muß die das Gas bildende Reaktion automatisch enden, wenn dieser Stoff nicht mehr mit Flüssigkeit benetzt wird.

Derartige Stoffe reagieren üblicherweise nicht nur auf Wasser in flüssiger Form, sondern auch auf Wasserdampf, so daß der im Muffeninneren vorhandene Feuchtigkeitsgehalt die entscheidende Größe ist. Bei richtiger Wahl des Schwellenwertes an Luftfeuchtigkeit, ab dem der chemische Stoff Gas produziert, kann aktiv dadurch über- bzw. unterschritten werden, daß mittels einer elektrischen Heizvorrichtung, die wiederum ihre Energie aus den elektrischen Kabeln 10, 11 bezieht, die Temperatur im Inneren erhöht und dadurch deren Sättigungsvermögen mit Wasser steigt. Wird der entsprechende chemische Stoff oberhalb der Sammelstelle, also in einem Bereich, in dem er in der Regel niemals mit flüssigem Wasser in Berührung kommt, angeordnet, so kann durch Einschalten und Ausschalten der elektrischen Heizvorrichtung der Feuchtigkeitsgehalt der Luft erhöht und damit der chemische Prozeß der Gasproduktion in Gang gesetzt bzw. gestoppt werden.

### c) Ausführungsbeispiele

Eine Ausführungsform gemäß der Erfindung ist im folgenden anhand der Figuren beispielhaft näher beschrieben. Es zeigen:
- Fig. 1:: eine erste Ausführungsform gemäß der Erfindung in Form eines vertikalen Längsschnittes durch eine Muffe,
- Fig. 2:: eine andere Ausführungsform gemäß der Erfindung in gleicher Betrachtung.

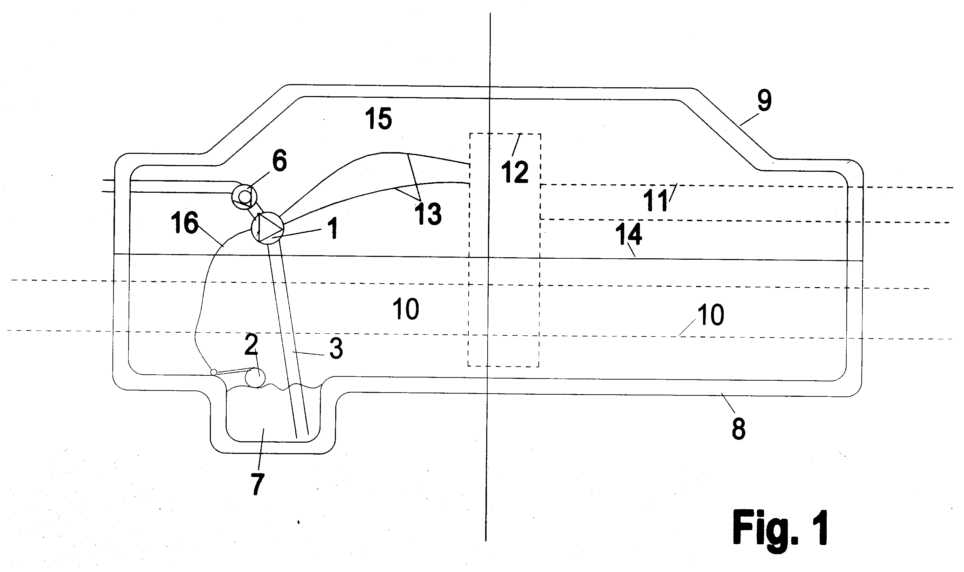

Fig. 1 zeigt eine Muffe, bestehend aus Muffenunterteil 8 und Muffenoberteil 9, die sich gegeneinander in einer Berührungsebene 14 berühren und dort gegeneinander abgedichtet und verschraubt sind. In den stirnseitigen Endbereichen weist die aus Unterteil 8 und Oberteil 8 bestehende Muffe abgedichtete Durchtrittsöffnungen für die elektrischen Leiter auf, und im Fall der hier dargestellten Abzweigmuffe, also für ein durchgehendes Hauptkabel 10 und einem demgegenüber elektrisch angeschlossenen Abzweigkabel 11, welche mittels eines sogenannten Klemmringes 12 elektrisch leitend miteinander verbunden sind, also eine Eintrittsöffnung und zwei Austrittsöffnungen.

Das auf die beschriebene Art und Weise trotz der vorhandenen Abdichtungsmaßnahmen möglicherweise in der Muffe vorhandene Wasser sammelt sich an einer Sammelstelle 7, welches ein tiefliegendes Reservoir im Boden des Unterteiles 8 darstellt. Diese Sammelstelle 7 ist ausreichend weit von den im Bereich des Klemmringes 12 vorhandenen, blank liegenden, elektrischen Kontakten entfernt, um durch auftretende Kondensation des Wassers der Sammelstelle 7 über Kriechströme Kurzschlüsse zwischen den Klemmstellen des Klemmringes 12 zu vermeiden.

Der Flüssigkeitsstand an der Sammelstelle 7 wird gemäß Fig. 1 durch einen mechanischen Schwimmerschalter 2 registriert. Von einem tiefliegenden Punkt der Sammelstelle 7 aus führt im Inneren der Muffe 8, 9 eine Abfuhrlieitung 3 über eine elektrische Pumpe 1, die ebenfalls im Muffeninnenraum 15 angeordnet ist, nach außen. Im Bereich zwischen der Pumpe 1 und dem äußeren freien Ende der Ableitung 3 ist ein Rückschlagventil 6 angeordnet, welches vorzugsweise im Inneren der Muffe und nahe an der Pumpe 1 liegt, um nach Abschalten der Pumpe 1 möglichst wenig Wasser aus dem Volumen der Ableitung zwischen Rückschlagventil 6 und Pumpe 1 zurück in die Sammelstelle 7 laufen zu lassen. Die Pumpe 1 ist über elektrische Leitungen 13 so mit den Kabeln 10, 11, die durch die Muffe führen, im Muffeninnenraum 15 verbunden, daß sie ihre elektrische Energie aus diesen Kabeln 10 bzw. 11 bezieht. Vorzugsweise sind die elektrischen Leitungen 13 innerhalb des Klemmringes 12 elektrisch leitend mit den Adern dieser Kabel verbunden.

Die Pumpe 1 schaltet sich automatisch dann ein, wenn der Schwimmerschalter 2 einen gewissen Mindestpegel an Flüssigkeit an der Sammelstelle 1 registriert, weshalb auch eine elektrische Verbindung 16 zwischen dem Schwimmerschalter 2 und der Pumpe 1 zusammen mit einer entsprechenden Auswertungsschaltung, die nicht dargestellt ist.

Die Einschaltdauer der Pumpe 1 kann ein jeweils fest programmierter Zeitraum sein, oder die Pumpe 1 wird wieder stillgesetzt, wenn der Schwimmerschalter 2 das Unterschreiten eines vorgegebenen Restniveaus an der Sammelstelle 7 feststellt.

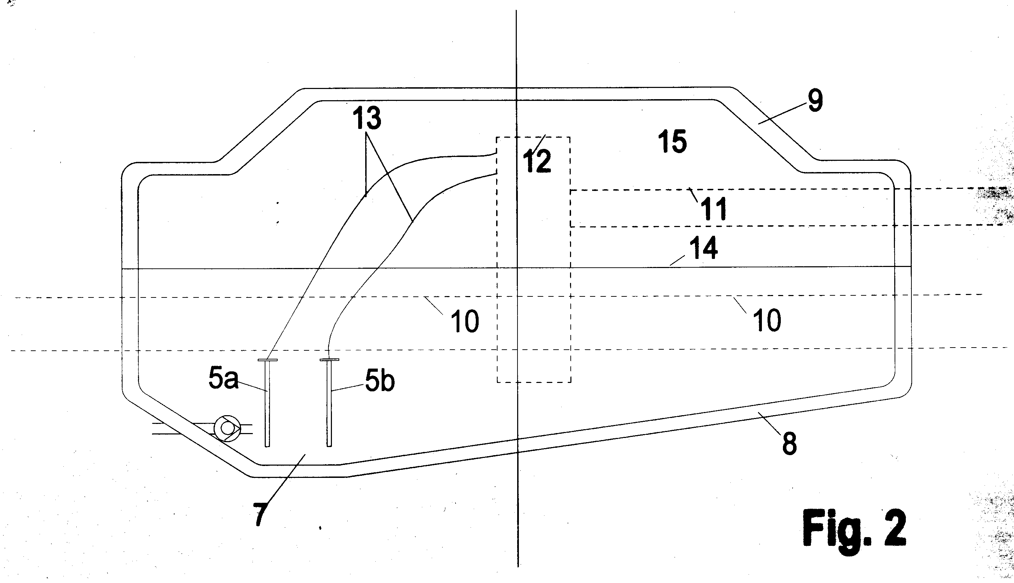

Fig. 2 unterscheidet sich von der Lösung der Fig. 1 bei ansonsten übereinstimmendem Aufbau dadurch, daß von der Sammelstelle 7 aus das Wasser nicht abgepumpt wird, sondern mittels Überdruck aus der Muffe 8, 8 herausgepreßt wird.

Dies kann durch eine Ableitung 3 gemäß Fig. 1 geschehen, wobei jedoch dabei auf die Pumpe 1 verzichtet werden kann. Bei der Ausführung der Fig. 2 ist jedoch vorgesehen, die Ableitung 3 nicht über einen hochliegenden Punkt der Wandung der Muffe nach außen zu führen, sondern direkt im Bereich der Sammelstelle 7 unterhalb des herauszupressenden Flüssigkeitsniveaus. Auch in diesem Fall ist - vorzugsweise wieder innerhalb der Muffe - ein Rückschlagventil 6 in der Ableitung vorzusehen.

Der Überdruck im Muffeninneren wird erzeugt, indem in das an der Sammelstelle 7 vorhandene Wasser zwei Elektroden 5a, 5b eintauchen, die über elektrische Leitungen 13 wiederum elektrisch mit den Adern der Kabel 10 bzw. 11 verbunden sind, wie anhand Fig. 1 bereits beschrieben. Dadurch findet im Wasser der Sammelstelle 7 eine Elektrolyse statt, die das Wasser in die gasförmigen Bestandteile Wasserstoff und Sauerstoff aufspaltet, was unter Vervielfachung des Volumens des Wassers geschieht. Der dadurch erzeugte Überdruck preßt beim Einsetzen der Elektrolyse und zunehmendem Druckaufbau das restliche Wasser der Sammelstelle 7 über die Ableitung 3 nach außen.

Auf die Ableitung 3 kann vollständig verzichtet werden, wenn in Kauf genommen wird, daß durch den so erzeugten Überdruck nicht das restliche Wasser, sondern das erzeugte Wasserstoffgas bzw. Sauerstoffgas nach außen gepreßt wird, was dann naturgemäß entlang der Berührungsebene 14 zwischen Unterteil und Oberteil 8 bzw. 9 der Muffe geschieht oder an den Abdichtungen um die Kabel 10 bzw. 11 bei ihrem Durchtritt durch die Muffenschale hindurch. Die dort vorhandenen Dichtungen müssen entsprechend ausgelegt sein, insbesondere im Hinblick auf einen Gasdurchtritt von der Innenseite zur Außenseite hin.

## Patentansprüche

1. Verfahren zum Entfernen von Wasser von den elektrischen Anschlußstellen in Kabelmuffen,
**dadurch gekennzeichnet, daß**
- in der Muffe (8, 9) auftretendes Wasser an einer Sammelstelle (7) in der Muffe gesammelt wird, und
- das Wasser wenigstens zum Teil aus der Muffe (8, 9) entfernt wird.

2. Verfahren nach Anspruch 1,
**dadurch gekennzeichnet, daß**
die Sammelstelle von den Anschlußstellen ausreichend weit entfernt ist und durch geeignete Gestaltung der Muffe gebildet wird.

3. Verfahren nach einem der vorhergehenden Ansprüche,
**dadurch gekennzeichnet, daß**
das Entfernen durch Abpumpen geschieht.

4. Verfahren nach Anspruch 3,
**dadurch gekennzeichnet, daß**
das Abpumpen mittels einer elektrisch betriebenen Pumpe (1) geschieht.

5. Verfahren nach Anspruch 4,
**dadurch gekennzeichnet, daß**
die Pumpe (1) mittels der durch die Muffe (8, 9) führenden elektrischen Leitung (10, 11) mit Energie versorgt wird.

6. Verfahren nach Anspruch 4 oder 5,
**dadurch gekennzeichnet, daß**
sich die Pumpe (1) bei erreichen eines Mindestniveaus an Wasser an der Sammelstelle (7) einschaltet und bei Unterschreiten eines unteren Schwellenwertes abschaltet.

7. Verfahren nach Anspruch 1,
**dadurch gekennzeichnet, daß**
das Wasser mittels Überdruck aus der Muffe (8, 9) herausgepreßt wird.

8. Verfahren nach einem der vorhergehenden Ansprüche,
**dadurch gekennzeichnet, daß**
in der für das Wasser vorgesehenen Ableitung (3) aus der Muffe (8, 9) ein Rückschlagventil (6) angeordnet ist.

9. Verfahren nach einem der vorhergehenden Ansprüche,
**dadurch gekennzeichnet, daß**
in der für das Wasser vorgesehenen Ableitung (3) aus der Muffe (8, 9) eine nur in Austrittsrichtung durchlässige Membran bzw. eine gasdurchlässige, flüssigkeitsundurchlässige Membran angeordnet ist.

10. Verfahren nach einem Ansprüche 7 bis 9,
**dadurch gekennzeichnet, daß**
der Überdruck durch Erwärmung des Muffeninneren erzeugt wird.

11. Verfahren nach Anspruch 10,
**dadurch gekennzeichnet, daß**
die Erwärmung mittels elektrischer Energie, welche aus der durch die Muffe (8, 9) geführten elektrischen Leiter (10, 11) entnommen wird, vorgenommen wird.

12. Verfahren nach einem der Ansprüche 7 bis 11,
**dadurch gekennzeichnet, daß**
der Überdruck durch elektrolythische Überführung des in der Muffe vorhandenen Wassers in einen gasförmigen Zustand erzeugt wird.

13. Verfahren nach einem der vorhergehenden Ansprüche,
**dadurch gekennzeichnet, daß**
der Überdruck durch Verdampfen des in der Muffe vorhandenen Wassers mittels elektrischer Beheizung erzeugt wird.

14. Vorrichtung zum Verhindern eines Kurzschlusses an den elektrischen Anschlußstellen in Kabelmuffen, insbesondere Erdmuffen, insbesondere zur Durchführung des Verfahrens nach Anspruch 1,
**dadurch gekennzeichnet, daß**
- eine Abfuhrleitung (3) die tiefliegende Sammelstelle (7) für das Wasser innerhalb der Muffe (8, 9) mit der Umgebung der Muffe über ein Rückschlagventil (6) verbindet, und
- eine Pumpe (1) im Inneren der Muffe mit der Abfuhrleitung (3) wirkverbunden ist sowie eine elektrische Verbindung zur Klemmstelle (12), bzw. den elektrischen Leitungen (10, 11) innerhalb der Muffe aufweist.

15. Vorrichtung zum Verhindern eines Kurzschlusses an den elektrischen Anschlulßstellen in Kabelmuffen, insbesondere Erdmuffen, insbesondere zur Durchführung des Verfahrens nach Anspruch 1,
**dadurch gekennzeichnet, daß**
- eine Abfuhrleitung (3) die tiefliegende Sammelstelle (7) für das Wasser innerhalb der Muffe mit der Umgebung der Muffe über ein Rückschlagventil (6) verbindet, und
- Elektroden (5a, 5b) in die Sammelstelle (7) für das Wasser eintauchen und elektrisch mit den elektrischen Leitungen (10, 11) innerhalb der Muffe in Verbindung stehen.

16. Vorrichtung nach Anspruch 15,
**dadurch gekennzeichnet, daß**
die Muffe - ausgenommen der Abfuhrleitung (6) - gegen austretendes Gas dicht verschlossen ist.
